# EUROPÄISCHE PATENTSCHRIFT

(11) **EP 0 507 165 B1**
(45) Veröffentlichungstag und Bekanntmachung des Hinweises auf die Patenterteilung: **21.06.1995**
(21) Anmeldenummer: 92104943.3
(22) Anmeldetag: 21.03.1992
(51) Int. Cl.: C01G 23/00

(54) **Verfahren zur Herstellung chloridarmer, wässriger Titanylnitratlösungen**
Process for the preparation of titanyl nitrate solutions low in chlorides
Procédé de préparation de solutions de nitrate de titanyle pauvre en chlorure

(30) Priorität: 03.04.1991 DE 4110685
(43) Veröffentlichungstag der Anmeldung: 07.10.1992
(73) Patentinhaber: MERCK PATENT GmbH, D-64271 Darmstadt (DE)
(72) Erfinder: Van Ghemen, Max Emanuel, Dr., W-6100 Darmstadt (DE); Heinz, Dieter, W-6148 Sonderbach (DE); Kuntz, Matthias, Dr., W-6104 Ober-Beerbach (DE)

(56) Entgegenhaltungen:
- US-A- 4 382 022
- WORLD PATENTS INDEX LATEST Derwent Publications Ltd., London, GB; AN 88-081697 & JP-A-63 035 419 (TAIYO YUDEN)
- WORLD PATENTS INDEX Derwent Publications Ltd., London, GB; AN 79-67739B & SU-A-637 331 (MOSCOW LOMONOSOV UNIV)

## Beschreibung

Die Anmeldung betrifft ein Verfahren zur Herstellung von chloridarmen, wäßrigen Lösungen von Titanylnitrat (Titanoxidnitrat, TiO(NO₃)₂), die einen Chloridgehalt von weniger als 200 ppm aufweisen.

Lösliche Titanverbindungen genießen zunehmendes Interesse in Chemie und angrenzenden technischen Gebieten. Beispielsweise können sie als vielseitige Reagenzien in der chemischen Synthese und Analytik eingesetzt werden. Von Bedeutung ist weiterhin die Verwendung dieser Verbindungen zur Abscheidung von Titandioxid in bzw. aus Lösungen, beispielsweise in Form von Solen und Gelen, von feinteiligen Pulvern, als dünne Beschichtungen auf beliebigen Substraten, wie etwa auf Glas für optische oder dekorative Zwecke oder bei der Herstellung von Perlglanzpigmenten auf Basis von mit TiO₂ beschichtetem Glimmer. Auf dem Sektor der Hochleistungskeramik spielt das Element Titan in Funktionskeramiken, insbesondere in Elektro- und Piezokeramiken, eine verbreitete und oft wesentliche Rolle. Typisches Beispiel hierfür sind Keramiken auf Basis von Bariumtitanat, die als Dielektrika und Piezoelektrika eingesetzt werden. Ausgangsmaterialien für derartige Keramiken sind Oxid- bzw. Mischoxidpulver, die zu Formkörpern verpreßt oder zu Beschichtungen verarbeitet und dann zur Keramik gesintert werden. Hierbei hängt die Sinterfähigkeit der Pulver sehr wesentlich von der Partikelgröße, Partikelgrößenverteilung, Partikelform und der Materialdichte der Oxidpulver ab. Weiterhin werden die Funktionseigenschaften der gesinterten Keramik entscheidend von der Homogenität der Elementverteilung, der Korngrößen und der Korngrößenverteilung beeinflußt. Mischoxidpulver, die nach klassischen Verfahren durch zum Teil wiederholtes Vermischen der verschiedenen Komponenten, Sintern und Vermahlen ("mixed-oxid-Verfahren") hergestellt sind, entsprechen nicht mehr den heutigen Anforderungen an Hochleistungskeramiken. Fortschrittliche Techniken der Pulverherstellung, bei denen die Ausgangsstoffe in gelöster Form vorliegen, gewährleisten jedoch eine weitgehende bis vollständige Homogenität in der Verteilung der Hauptkomponenten und der Dotierstoffe auf molekularer/atomarer Ebene und ermöglichen die Erzeugung sehr feinteiliger, hochkompaktierbarer und hochsinteraktiver Pulver. Entsprechende "naßchemische" Verfahren zur Erzeugung von Mischoxidpulvern arbeiten beispielsweise nach dem Sol-Gel-Prozeß, nach dem Copräzipitationsverfahren oder nach Sprühtrocken- oder Sprühröst- bzw. Lösungsverbrennungsverfahren. Verfahren des letzteren Typs sind beispielsweise in DE-PS 38 40 316 und DE-PS 39 16 643 beschrieben. Das letztgenannte Patent beschreibt ein besonders vorteilhaftes Verfahren, worin Metallnitratlösungen in einem stöchiometrisch kontrollierten Verbrennungsprozeß in keramische Mischoxid-Pulver überführt werden.

Für die Herstellung von Titan-haltigen Mischoxidpulvern nach solchen Verfahren wäre daher Titanylnitrat bzw. wäßrige Titanylnitratlösung die Titan-liefernde Komponente der Wahl.

Andere lösliche bzw. flüssige Titanverbindungen wie Titanylsulfat (TiOSO₄), Titantetrachlorid und Titanylchlorid (TiOCl₂) sind als solche bereits für keramische Zwecke ungeeignet. Organische Titanverbindungen, wie z.B. Titanorthoester, sind teuer. Allen diesen Verbindungen ist gemein, daß sie aufgrund ihrer hohen Hydrolyseempfindlichkeit sehr instabil und problematisch zu handhaben sind.

Schlüsselsubstanz für praktisch alle wesentlichen Titanverbindungen ist Titantetrachlorid, das aus Titandioxid hergestellt wird. Letzteres wird wiederum aus natürlich vorkommenden Mineralien gewonnen.

Erstaunlicherweise bietet die einschlägige Fachliteratur keinerlei Hinweise für eine praktikable und möglicherweise gar im technischen Maßstab durchführbare Herstellung von Titanylnitrat bzw. dessen wäßriger Lösung.

Theoretisch sollte es möglich sein, Titanylnitrat aus Titantetrachlorid bzw. dessen Teilhydrolyseprodukt Titanylchlorid durch Umsetzung mit Salpetersäure gemäß den Formelgleichungen

TiCl₄ + 2 HNO₃ + H₂O → TiO(NO₃)₂ + 4 HCl

TiOCl₂ + 2 HNO₃ → TiO(NO₃)₂ + 2 HCl

in wäßriger Lösung herzustellen.

In der Praxis führen aber Umsetzungen auf Basis dieser Reaktionen nicht zum Ziel, da zumindest eine teilweise Hydrolyse, meist bereits schon während der Reaktion, einsetzt. Eine vollständige Wiederauflösung eines einmal ausgefällten Titandioxids oder der TiO₂-Hydrogele ist praktisch nicht möglich. Unabhängig davon ist es nicht möglich, die bei der Reaktion entstehende Salzsäure aus der Reaktionslösung zu entfernen. Der Versuch, diese beispielsweise durch Erhitzen oder Durchleiten von Inertgas auszutreiben, bleibt unvollständig und führt ebenfalls zu TiO₂-Ausfällungen. Die prinzipiell denkbare Ausfällung als Silberchlorid ist selbst für geringere Restgehalte an Chlorid aus wirtschaftlichen Gründen unpraktikabel.

Ein Gehalt an Chlorid ist in Hochtemperatur-Festkörperreaktionen, wie es das Sintern von Keramiken darstellt, äußerst unerwünscht. Metallchloride sind bei hohen Temperaturen bekanntlich überaus flüchtig. Auch bereits sehr geringe Mengen an Chlorid in keramischen Massen für Hochleistungskeramiken haben daher den Effekt, daß es während der Sinterung zu Zusammensetzungsveränderungen kommt und sich beispielsweise die Gehalte an Dotierstoffen dramatisch verändern. Speziell bei der Herstellung von Bariumtitanat kommt der unerwünschte Effekt hinzu, daß Chloridionen anstelle von Sauerstoffionen in das Bariumtitanat-Gitter eingebaut werden.

Als akzeptable Grenze für einen hier noch tolerierbaren Restgehalt an Chlorid können etwa 200 ppm, bezogen auf Titanylnitrat, angesehen werden.

Es bestand daher das dringende Bedürfnis, ein Verfahren aufzufinden, mit dem sich chloridarme, wäßrige Lösungen von Titanylnitrat, die einen Chloridgehalt von weniger als 200 ppm aufweisen, in möglichst einfacher und auch in technischem Maßstab durchführbarer Weise herstellen lassen.

Überraschend wurde nun gefunden, daß sich bei der Umsetzung von Titantetrachlorid oder Titanylchlorid mit Salpetersäure dann ohne weiteres chloridarme, wäßrige Lösungen von Titanylnitrat mit einem Restgehalt an Chlorid von weniger als 200 ppm erhalten lassen, wenn man Titantetrachlorid oder Titanylnitrat mit Salpetersäure in Gegenwart von überschüssiger Salpetersäure und/oder Wasserstoffperoxid umsetzt, wodurch der Gehalt an Chlorid zu Chlor oxidiert wird.

Gegenstand der Erfindung ist somit ein Verfahren zur Herstellung chloridarmer, wäßriger Lösungen von Titanylnitrat durch Umsetzung von Titantetrachlorid oder Titanylchlorid mit Salpetersäure, das dadurch gekennzeichnet ist, daß man in Gegenwart von überschüssiger Salpetersäure und/oder Wasserstoffperoxid umsetzt, wodurch der Gehalt an Chlorid zu Chlor oxidiert wird und wobei man ein Produkt mit einem restlichen Chloridgehalt von weniger als 200 ppm erhält.

Grundprinzip des erfindungsgemäßen Verfahrens ist, daß das durch die Umsetzung von Titantetrachlorid bzw. Titanylchlorid mit Salpetersäure in Form von Salzsäure in der Reaktionslösung vorliegende Chlorid mittels eines geeigneten und für die spätere Weiterverwendung des Produktes unschädlichen Oxidationsmittels zu Chlor zu oxidieren, welches sich als Chlorgas aus dem Reaktionsgemisch leicht verflüchtigt oder zumindest ohne weiteres austreiben läßt. Als geeignete Oxidationsmittel fungiert hierbei zweckmäßigerweise in stöchiometrischem Überschuß eingesetzte Salpetersäure oder eine stöchiometrisch entsprechende Menge Wasserstoffperoxid oder die Kombination von Salpetersäure und Wasserstoffperoxid. Als stöchiometrisch entsprechende Mengen dieser Oxidationsmittel sind die Mengen zu verstehen, die ausreichend sind, um den durch die eingesetzte Menge an Titanverbindungen vorgegebenen gesamten Gehalt an Chlorid vollständig zu Chlor zu oxidieren. Ein Überschuß an Oxidationsmittel zur Sicherheit, der durchaus auch der doppelten Menge in Bezug auf den stöchiometrisch erforderlichen Bedarf entsprechen kann, ist hierbei unkritisch.

Das erfindungsgemäße Verfahren kann entsprechend der eingesetzten Titanverbindungen und der Wahl der Oxidationsmittel in Form verschiedener Varianten realisiert werden, denen die folgenden Reaktionen zugrunde liegen:
a) Titantetrachlorid wird mit Salpetersäure im molaren Verhältnis 1:4 entsprechend der Formelgleichung

   TiCl₄ + 4 HNO₃ → TiO(NO₃)₂ + 2 Cl₂ + N₂O₃ + 2 H₂O

   umgesetzt.
b) Titantetrachlorid wird mit Salpetersäure und Wasserstoffperoxid im molaren Verhältnis 1:2:2 entsprechend der Formelgleichung

   TiCl₄ + 2 HNO₃ + 2 H₂O₂ → TiO(NO₃)₂ + 2 Cl₂ + 3 H₂O

   umgesetzt.
c) Titanylchlorid wird mit Salpetersäure im molaren Verhältnis 1:3 entsprechend der Formelgleichung

   2 TiOCl₂ + 6 HNO₃ → 2 TiO(NO₃)₂ + 2 Cl₂ + N₂O₃ + 3 H₂O

   umgesetzt.
d) Titanylchlorid wird mit Salpetersäure und Wasserstoffperoxid im molaren Verhältnis 1:2:1 entsprechend der Formelgleichung

   TiOCl₂ + 2 HNO₃ + H₂O₂ → TiO(NO₃)₂ + Cl₂ + 2 H₂O

   umgesetzt.

Auch bei diesen Varianten gilt, daß Salpetersäure und/oder Wasserstoffperoxid auch in Überschuß in Bezug auf den stöchimetrischen Bedarf eingesetzt werden kann.

Als Ausgangsstoffe kommen Titantetrachlorid und Titanylchlorid gleichermaßen in Betracht. Das flüssige Titantetrachlorid wird zweckmäßigerweise in reiner Form eingesetzt. Aufgrund der Hydrolyseempfindlichkeit von Titantetrachlorid und dessen entsprechend problematischere Handhabbarkeit sind die für diese Verbindung an sich bekannten Vorkehrungen zu treffen. Titanylchlorid, das zweckmäßigerweise in Form wäßriger Lösung in dem erfindungsgemäßen Verfahren eingesetzt werden kann, ist im wesentlichen unproblematisch zu handhaben und daher bevorzugt. Besonders zweckmäßig ist es, Titanylnitrat in Form einer etwa 60 Gew.%igen wäßrigen Lösung einzusetzen.

Die für die Umsetzung erforderliche Salpetersäure weist zweckmäßigerweise einen Gehalt von 60-100 Gew.% auf. Vorzugsweise wird rauchende Salpetersäure (mit einem Gehalt von ca. 100 Gew.%) eingesetzt.

Soll von Wasserstoffperoxid als zusätzlichem Oxidationsmittel Gebrauch gemacht werden, so setzt man zweckmäßigerweise Wasserstoffperoxid eines Gehaltes von 20 bis 70 Gew.% ein. Vorzugsweise hat das eingesetzte Wasserstoffperoxid einen Gehalt von 30 Gew.%.

In einer besonders bevorzugten Ausführungsform des erfindungsgemäßen Verfahrens setzt man eine etwa 60 Gew.%ige wäßrige Lösung von Titanylchlorid mit rauchender Salpetersäure und 30 Gew.%igem Wasserstoffperoxid um, wobei man eine wäßrige Lösung von Titanylnitrat erhält, die umgerechnet einen Gehalt von etwa 15 Gew.% Titandioxid aufweist. Eine Titanylnitratlösung dieser Konzentration eignet sich besonders für die Herstellung von Oxid- bzw. Mischoxidpulvern für keramische Zwecke nach sprühpyrolytischen Verfahren, wie etwa gemäß DE-PS 39 16 643.

Das erfindungsgemäße Verfahren zur Herstellung chloridarmer, wäßriger Titanylnitratlösungen läßt sich äußerst einfach und ohne größeren apparativen Aufwand durchführen. Das Verfahren läßt sich problemlos gerade auch im Technikums- und produktionstechnischen Maßstab durchführen. Hierbei können an sich bekannte und übliche Apparaturen und Techniken Anwendung finden. Im Prinzip geeignet sind Reaktionsgefäße oder -kessel geeigneten Volumens aus inertem Material, wie z.B. Glas oder Email-beschichtetes Metall. Die Reaktionsgefäße können zweckmäßigerweise mit Ein- und Auslaßeinrichtungen, Vorrichtungen zur Abführung der Reaktionsgase sowie mit Rühr- oder Mischvorrichtungen versehen sein.

Vom Verfahrensablauf genügt es, die entsprechenden Reaktanden in den jeweils erforderlichen molaren Mengen zusammenzubringen und zu mischen. Die Umsetzung erfolgt hierbei sofort und quantitativ, wobei sich Chlorgas und nitrose Gase entwickeln, die mit üblichen Mitteln und Techniken abgeleitet und neutralisiert werden können. Da die Reaktion exoterm ist, ist es zweckmäßig, durch Regelung der Zugabegeschwindigkeit der Reaktanden und/oder durch Kühlung die Reaktionstemperatur auf 40 °C oder darunter zu halten. Reste der bei der Umsetzung entstehenden Gase lassen sich durch intensives Rühren, leichtes Erwärmen oder besonders zweckmäßig durch das Durchleiten von Stickstoffgas aus der Reaktionslösung austreiben.

Besonders überraschend ist, daß das erfindungsgemäße Verfahren sehr unkritisch in Bezug auf etwaige TiO₂-Ausfällungen ist, insbesondere wenn man die Reaktionstemperatur nicht über 40 °C steigen läßt.

Die Reaktionsdauer ist im wesentlichen abhängig von der Ansatzmenge und läßt sich typisch für einen 50-l-Ansatz mit 12-24 Stunden angeben. Das Ende der Reaktion ist sehr leicht daran zu erkennen, daß bei Zugabe von (weiterem) Wasserstoffperoxid die charakteristische intensivrote Farbe des Titanylperoxidions auftritt und über einen längeren Zeitraum, typisch etwa 3 Stunden, bestehen bleibt. Dies zeigt an, daß dann kein Chlorid zu Aufoxidation zu Chlor mehr vorhanden ist, so daß sich mit unverbrauchtem Wasserstoffperoxid das Titanylperoxid bilden kann. Bleibt die Titanylperoxidfärbung über einen längeren Zeitraum stabil, so beträgt der Restgehalt an Chlorid in der Reaktionslösung in jedem Fall weniger als 200 ppm, bezogen auf den Gehalt an Titanylnitrat. In der Regel wird ein Restgehalt von 100-10 ppm oder auch weniger erreicht. Der Chloridgehalt kann mit üblichen analytischen Methoden qualitativ und quantitativ bestimmt werden, wie beispielsweise durch potentiometrische Titration mit Silbernitrat.

Die erhaltene Titanylnitratlösung kann so wie sie ist gleich ihrem jeweiligen weiteren Verwendungszweck zugeführt werden und ist in dieser Form aufgrund ihres Restgehaltes an Chlorid von weniger als 200 ppm, insbesondere von weniger als 100 ppm, besonders geeignet zur Herstellung von keramischen Oxid- bzw. Mischoxidpulvern durch Sprühpyrolyse.

Selbstverständlich können die nach dem erfindungsgemäßen Verfahren erhältlichen Titanylnitratlösungen auch mit üblichen Mitteln aufkonzentriert oder verdünnt.

### Beispiel

Als Apparatur dient ein Reaktionsgefäß eines Fassungsvermögens von 80 l aus Glas, das am Boden ein Gaseinlaßventil und oberseitig einen Einlaß für Flüssigkeiten und einen Auslaß zur Absaugung der Reaktionsgase aufweist.

Mittels leichten Unterdrucks werden in das Reaktionsgefäß 43,5 kg (27,7 l) 60 Gew.%ige wäßrige Titanylchloridlösung eingezogen. Durch das Bodenventil wird nun während des weiteren Verfahrensablaufes Stickstoffgas mit leichtem Überdruck eingeblasen, um hierdurch für eine gute Durchmischung der Reaktionsflüssigkeiten und eine rasche Austragung der entstehenden Reaktionsgase zu sorgen. Innerhalb von 6 Stunden werden über den oberseitigen Einlaß 34 kg (25 l) rauchende Salpetersäure eingetragen. Innerhalb weiterer 6 Stunden werden 9,4 kg (8,5 l) 30 Gew.%iges Wasserstoffperoxid portionsweise derart zudosiert, daß die Temperatur 40 °C nicht übersteigt. Das sich hierbei bildende Chlor und nitrose Gase werden mit dem Stickstoff kontinuierlich abgesaugt. Danach läßt man noch 12 Stunden ausreagieren. Eine beständige Rotfärbung der Lösung zeigt das Ende der Reaktion an. Man erhält eine wäßrige Lösung von Titanylnitrat mit einem umgerechneten Gehalt von 15 Gew.% Titandioxid und einem Restgehalt an Chlorid von 100 ppm.

## Patentansprüche

1. Verfahren zur Herstellung chloridarmer, wäßriger Lösungen von Titanylnitrat durch Umsetzung von Titantetrachlorid oder Titanylchlorid mit Salpetersäure, dadurch gekennzeichnet, daß man in Gegenwart von überschüssiger Salpetersäure und/oder Wasserstoffperoxid umsetzt, wodurch der Gehalt an Chlorid zu Chlor oxidiert wird und wobei man ein Produkt mit einem restlichen Chloridgehalt von weniger als 200 ppm erhält.

2. Verfahren nach Anspruch 1, dadurch gekennzeichnet, daß man mit Salpetersäure eines Gehaltes von 60-100 Gew.% umsetzt.

3. Verfahren nach den Ansprüchen 1 oder 2, dadurch gekennzeichnet, daß man mit Wasserstoffperoxid eines Gehaltes von 20-70 Gew.% umsetzt.

4. Verfahren nach Anspruch 1, dadurch gekennzeichnet, daß man eine etwa 60 Gew.%ige wäßrige Lösung von Titanylchlorid mit rauchender Salpetersäure und 30 Gew.%igem Wasserstoffperoxid umsetzt.

## Claims

1. Process for the preparation of low-chloride aqueous solutions of titanyl nitrate by reaction of titanium tetrachloride or titanyl chloride with nitric acid, characterised in that the reaction is carried out in the presence of excess nitric acid and/or hydrogen peroxide, as a result of which the content of chloride is oxidised to chlorine and where a product having a residual chloride content of less than 200 ppm is obtained.

2. Process according to Claim 1, characterised in that the reaction is carried out using nitric acid having a content of 60-100% by weight.

3. Process according to Claim 1 or 2, characterised in that the reaction is carried out using hydrogen peroxide having a content of 20-70% by weight.

4. Process according to Claim 1, characterised in that an approximately 60% by weight aqueous solution of titanyl chloride is reacted with fuming nitric acid and 30% by weight hydrogen peroxide.

## Revendications

1. Procédé de préparation de solutions aqueuses pauvres en chlorures, de nitrate de titanyle, en faisant réagir le tétrachlorure de titane ou le chlorure de titanyle avec l'acide nitrique, caractérisé en ce que la réaction se produit en présence d'acide nitrique en excès et/ou de peroxyde d'hydrogène, de façon que les chlorures présents soient oxydés en chlore afin d'obtenir un produit ayant une teneur résiduelle en chlorure inférieure à 200 ppm.

2. Procédé selon la revendication 1, caractérisé en ce que l'on utilise de l'acide nitrique ayant une teneur de 60 à 100% en poids.

3. Procédé selon la revendication 1 ou 2, caractérisé en ce que l'on utilise du peroxyde d'hydrogène ayant une teneur de 20 à 70% en poids.

4. Procédé selon la revendication 1, caractérisé en ce que l'on fait réagir une solution aqueuse à 60% en poids environ de chlorure de titanyle avec de l'acide nitrique fumant et avec du peroxyde d'hydrogène à 30% en poids.
